Europäisches Patentamt

European Patent Office

Office européen des brevets

(11) Publication number: **0 304 529**

**A1**

(12) # EUROPEAN PATENT APPLICATION

(21) Application number: 87500077.0

(22) Date of filing: 13.11.87

(51) Int. Cl.4: **F16K 11/02 , E03C 1/04 , F16K 31/58**

The title of the invention has been amended (Guidelines for Examination in the EPO, A-III, 7.3).

(30) Priority: **01.07.87 ES 8701912**

(43) Date of publication of application:
**01.03.89 Bulletin 89/09**

(84) Designated Contracting States:
**AT BE CH DE FR GB IT LI LU NL**

(71) Applicant: **CASA BUADES, S.A.**
**c/ Eusebio Estada 78-80**
**E-07004 Palma de Mallorca(ES)**

(72) Inventor: **Hecht Burgos, Ignacio**
**Eusebio Estada, 78-80**
**E-07004 Palma de Mallorca(ES)**

(74) Representative: **Elzaburu Marquez, Alberto et al**
**Sres. Elzaburu Industrial Property Attorneys**
**Miguel Angel, 21**
**E-28010 Madrid(ES)**

(54) **Swivel mechanism of the swivel spout of a single lever mixer.**

(57) Improved turning mechanism in mono-command sanitary mixers with rotatory pipe characterized in that it possesses a conduit in form of a bend (4) which conveys the mixed waters from the cartridge to the periphery of the body, constituted by a turning washer (10), support of the pipe (3) where the water is poured.

FIG.-1

EP 0 304 529 A1

## IMPROVED TURNING MECHANISM IN MONO-COMMAND SANITARY MIXERS

### INTRODUCTION

In sanitary fittings the monobloc mixers comprise a single body which accommodates: 1) the hot and cold water input supply, normally through pipes which are connected to the network; 2) the output of mixed water, by means of pipe, douche or douchette, the pipe capable of being fixed (a single cast piece with the body) or rotatory; and 3) a mixing mechanism consisting of two independent controls which act on the fixtures controlling the water flow, one cold and the other hot, or of a single control (mono-command) acting on a cartridge which controls at the same time the mix ratio and the amount (flow) required.

### DIFFICULTIES OP THE ROTATORY PIPE

In the specific case of a sink mono-command mixer, this tends to be constructed with rotatory pipe for obvious reasons of use. Provided that the body is able to accommodate the cartridge of the mono-command with its handle, plus the rotatory pipe, few options are left for a solution: to date the system which seems most widespread consists of a pipe with a concentrical turn to the axis of the body and cartridge and underneath this latter.

The fact of the pipe being rotatory compels the use of toroidal gaskets which assure sealing between the latter and the body and, owing to design technology, said gaskets have to possess a large diameter, almost that of the body itself, to provide room inside for the feed suppliers to the cartridge as well as for the mixed water to issue.

Said gaskets under such conditions involve three problems:

1) The large diameter demands a very broad range of tolerances, compelling one to operate with very strict measurements in the coupling body-pipe, in order to ensure sealing.

2) The tightenings in the gasket tend to be fairly numerous for the same reasons of tolerance as in the preceding point, fact which is aggravated by two toroidal gaskets normally being required which at the same time ensure sealing in the upper and lower parts of the rotatory ring. These great tightenings provoke strong friction, giving rise to a high handling resistance, making for forced and uncomfortable rotation of the pipe.

3) Excessive friction moreover leads to another basic problem: premature gasket wear and subsequent loss of sealing, problem hastened along by reason of speed. In effect, for a particular angle of rotation, the large-diameter gasket grates at greater speed and upon a greater surface than a small one.

Summing up, there are three interrelated problems: the difficulty or enhanced expense in mechanization of the adjustment, handling resistance and premature loss of sealing through gasket wear. These are problems with a common root: gaskets with large diameter.

The turning mechanism in mono-command sanitary mixers with rotatory pipe seeks to solve the problems outlined above. Said mechanism therefore comprises a crank ring conductor of the mixed water from the output of the cartridge to the pipe, passing through a chamber disposed between the crank ring and the outer washer which supports the pipe, and the whole arrangement having an integral rotation.

In accordance with another additional feature, the turning mechanism object of the invention is characterized in that in the crank ring a pair of toroidal gaskets is provided for between said ring and the washer as well as another toroidal gasket in the upper part of the crank ring and the upper part of the body.

As alternative embodiment of the turning mechanism object of the invention is provided for those cases wherein the water supply inlet is behind and the outlet of the same is in front. In this case the crank ring is joined directly to the pipe support washer, in front thereof, through a toroidal gasket accommodated in an horizontal axis of the ring and introduced into a circular side opening in the pipe support washer.

A mutual characteristic in the two embodiments described is that the guiding of the turning components is carried out solely between the surfaces of contact of the same with the body of the fitting without cooperation of the toroidal gaskets.

The turning mechanism in mono-command mixing fittings with rotatory pipe object of the invention will next be explained in greater detail, with the aid of the accompanying drawings, wherein:

Figure 1 represents a cross-section of the turning mechanism object of the invention coupled to any mono-command.

Figure 2 shows a sectional view as per line A-B of the turning mechanism represented in figure 1;

Figure 3 shows a sectional view of a second embodi ment of the turning mechanism in mono-command mixing fittings object of the invention; and

Figure 4 shows a sectional view as per line A-B of figure 3 of the turning mechanism object of the invention.

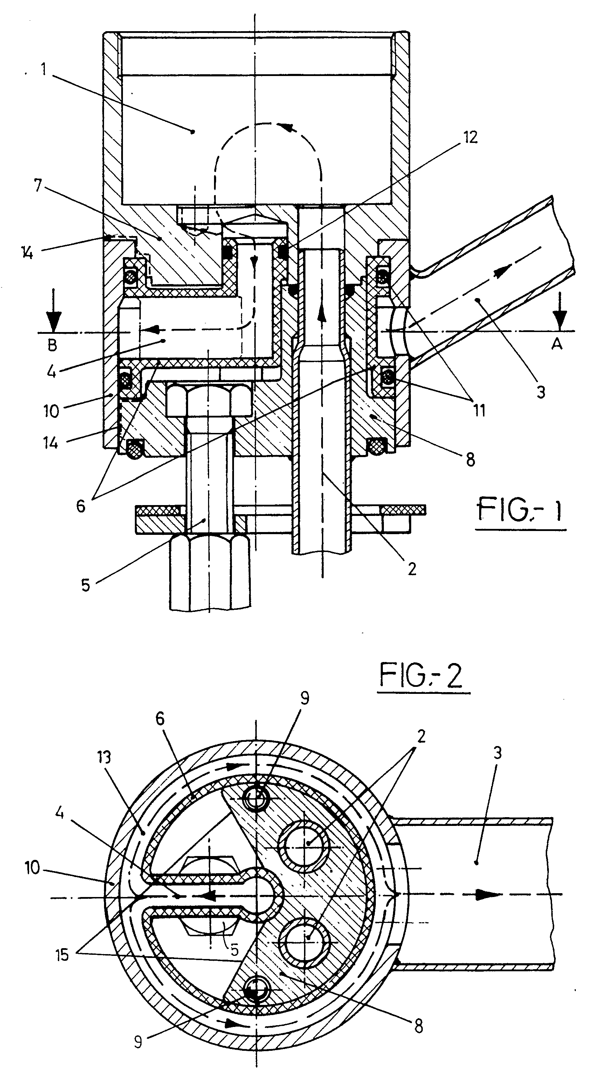

Making reference to figure 1, therein a turning mechanism is represented, coupled to a mono-command for cartridge with crossed water inputs, that is, the supplies accede to the cartridge at the front part of the fitting, and the mixed waters issue at the back part.

Under reference number 1 an upper space is designated which constitutes the housing of the cartridge which will mix the waters proceeding from the feeding pipes (2), sending them to the pipe (3) through the conduit (4), the water circulating in the direction indicated by the dashed line represented in figure 1.

The whole arrangement is affixed to the fitting through a holding mechanism (5) which in the case represented is constituted by a screw.

As can be seen from figure 1 and in particular from figure 2, the component adapted to convey the mixed waters from the cartridge to the pipe (3) is constituted by a crank ring (6), which extends toward the interior of the body by means of a bend (4) until meeting the output of waters from the cartridge, thereby connecting these with the circular chamber (13) which is created between the mentioned ring (6) and the outer washer (10) which supports the pipe.

As can be seen from figure 1, the body of the fitting forms the fixed components which are essentially comprised of two pieces, i.e., the upper part (7) of the body of the sanitary mixer and the lower part (8), both integral by assembly screws (9) (figure 2). The upper part (7) of the body is the one adapted to accommodate the cartridge in the upper space (1) whereas the lower part (8) accommodates the fixing components (5) to the fitting, as well as the supply pipes (2).

Between both parts (7, 8) the mobile components are arranged, which cause the turning of the rotatory pipe. These mobile components are essentially the mentioned crank ring (6) and the supporting washer (10) of the pipe (3). To said supporting washer (10) the desired pipe (3) is welded, or otherwise the arrangement is designed as a single cast piece. All of these mobile components turn integrally, being guided by the surfaces (14) of contact with the body.

The crank ring (6) accommodates three toroidal gaskets, the two largest ones (11) are integrally accommodated with the supporting rotatory washer (10) of the pipe (3), moreover ensuring the sealing between both. The smaller gasket (12) ensures the sealing between the upper part of the crank ring (6) and the upper part (7) of the body of the sanitary mixer.

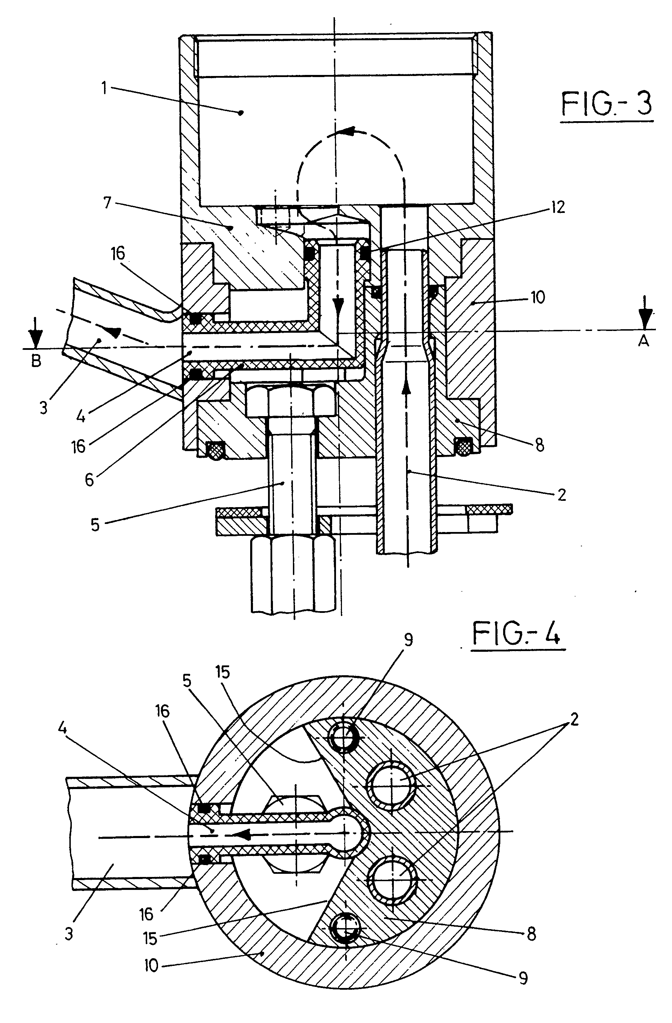

In figures 3 and 4 there is represented an alternative embodiment of the turning mechanisms for sanitary mixers whrein the feed supplies meet the cartridge at the back part of the fitting, and the mixed waters issue at the front part. In these figures like reference numbers have their equivalence with those of figures 1 and 2. As can be seen, in this embodiment, the entire anular zone of the crank ring (6) is not necessary, simply the bend (4) being sufficient which remains joined by means of the toroidal gasket (16) to the rotatory support (10), directly in front of the outlet of the pipe (3). Thus, the toroidal gasket (16) would now fulfil the function entrusted earlier to the gaskets (11) of large diameter, likewise operating in a static way without being subject to slipping.

## SCHEME OF OPERATION

The mixed water from the cartridge circulates through the bend (4) and meets the chamber (13) which is arranged between the ring (6) and the supporting washer (10), to issue outside through the pipe. The chamber remains sealed due to the toroidal gaskets (11). Said gaskets have a static operation since they are dimensioned for great tightening and make integral both pieces: ring and support. Accordingly, there being no wear through friction the lifetime of these gaskets is in principle infinite.

All of these mobile components turn integrally being guided by the surfaces (14) of contact with the body. The small gasket (12) of the bend is thus the only one with dynamic operation and ensures the sealing between the mobile components and the body. In this gasket two special circumstances are encountered on the one hand, neither it nor its housing is the guide of the turn, such that it does not have an uneven or forced operation. On the other hand, it is of reduced dimensions, so that the root problem of rotatory pipes is solved, providing a more precise adjustment, smooth operation and minimum wear.

The turning limits of the pipe are provided by the "V" section of the lower part (8) of the body, by stopping the bend with the inner vertical surfaces (15) of said "V". This affords two advantages: the angle of turn chosen can be readily obtained on dimensioning the "V" section referred to. It suffices to design the same with the desired angle. Moreover, once the fitting is installed on the sanitary unit, by an additional effort on the pipe, the large toroidal gaskets (11) can be forced to slide altering the relative position between the supporting washer (10) and the ring (6), and thereby achieving the desired positioning of pipe stops and sweeps.

It has to be understood that the above description of the turning mechanism object of the invention can be susceptible to modification and alteration, which have to be understood as comprised within the scope and spirit of the present invention, provided they do not alter the essence of the same.

## Claims

1.- Improved turning mechanism in mono-command sanitary mixers with rotatory pipe characterized in that it possesses a conduit in the form of a bend (4) which bears the mixed waters from the cartridge to the periphery of the body, constituted by a turning washer (10), a pipe support (3) where the water is poured.

2.- Turning mechanism according to Claim 1, characterized in that the vertical axis of the bend (4) has been provided with a slot where a small toroidal gasket (12) is housed which guarantees sealing between the upper part of the body (7) and the bend (4).

3.- Turning mechanism according to Claim 2, characterized in that the small toroidal gasket (12) is the only one in the whole mechanism that operates by sliding.

4.- Turning mechanism according to Claim 1, characterized in that the bend (4) forms a single piece with a ring (6) such that the waters conveyed by said bend (4) can pass through a chamber (13) arranged between the said ring (6) and the washer (10) support of the pipe (3) until issuing through the latter.

5.- Turning mechanism according to Claim 4, characterized in that the ring (6) turns integrally with the washer (10) due to two toroidal gaskets (11) dimensioned with strong tightening and which moreover fulfil the purpose of ensuring sealing between both pieces.

6.-Turning mechanism according to Claim 1, characterized in that the horizontal axis of the bend (4) is housed in a hole made in the washer (10) support of the pipe (3) and in front of the latter in such manner that both pieces turn integrally and the waters conveyed through the bend (4) issue directly to the pipe (3).

7.- Turning mechanism according to Claim 6, characterized in that the sealing between the bend (4) and the washer (10) support of the pipe is guaranteed by a toroidal gasket (16) housed in a slot made in the horizontal axis of the bend (4).

8.- Turning mechanism according to any of Claims 1 to 7, characterized in that the guiding of the housing components is effected solely between the surfaces of contact (14) of these ones with the body of the fitting without cooperation of the toroidal gaskets.

FIG.- 1

FIG.- 2

EP 0 304 529 A1

FIG.-3

FIG.-4

| DOCUMENTS CONSIDERED TO BE RELEVANT | | | EP 87500077.0 |
|---|---|---|---|

| Category | Citation of document with indication, where appropriate, of relevant passages | Relevant to claim | CLASSIFICATION OF THE APPLICATION (Int. Cl.4) |
|---|---|---|---|
| Y | DE - A1 - 3 509 520 (HANSA METALL-WERKE AG) <br> * Fig. 1-5, and belonging text * <br> -- | 1,7 | F 16 K 11/02 <br> E 03 C 1/04 <br> F 16 K 31/58 |
| Y | DE - A1 - 3 510 930 (HOLZER) <br> * Page 6, line 16 - page 8, line 21; fig. 4-7 * <br> -- | 1,7 | |
| A | US - A - 3 796 231 (HARE) <br> * Fig. 1,2, and belonging text * <br> -- | 1,7 | |
| A | US - A - 4 103 709 (FISCHER) <br> * Abstract; fig. 1 * <br> ---- | 1 | |

| | | | TECHNICAL FIELDS SEARCHED (Int. Cl.4) |
|---|---|---|---|
| | | | F 16 K 11/00 <br> F 16 K 21/00 <br> F 16 K 31/00 <br> E 03 C 1/00 |

The present search report has been drawn up for all claims

| Place of search | Date of completion of the search | Examiner |
|---|---|---|
| VIENNA | 19-10-1988 | ROUSSARIAN |